# EUROPEAN PATENT SPECIFICATION

(11) **EP 1 430 660 B1**
(45) Date of publication and mention of the grant of the patent: **24.05.2006**
(21) Application number: 02766252.7
(22) Date of filing: 04.09.2002
(51) Int. Cl.: H04L 12/56

(54) **EMULATING PUSH FUNCTIONALITY IN CELLULAR DATA NETWORKS**
EMULATION DER PUSHFUNKTIONALITÄT IN ZELLULAREN DATENNETZWERKEN
EMULATION DE LA FONCTIONNALITE OFFERTE PAR LE MODELE DU POUSSER DANS DES RESEAUX CELLULAIRES DE DONNEES

(30) Priority: 21.09.2001 US 960120
(43) Date of publication of application: 23.06.2004
(73) Proprietor: INTEL CORPORATION, Santa Clara, CA 95052 (US)
(72) Inventor: KNAUERHASE, Robert, Portland, OR 97201 (US); DESHPANDE, Nikhil, Beaverton, OR 97007 (US)
(74) Representative: Beresford, Keith Denis Lewis
(86) International application number: PCT/US2002/028522
(87) International publication number: WO 2003/028317

(56) References cited:
- WO-A-00/24209
- WO-A-01/28168
- US-A- 5 901 142
- VALKO A G: "CELLULAR IP: A NEW APPROACH TO INTERNET HOST MOBILITY" , COMPUTER COMMUNICATIONS REVIEW, ASSOCIATION FOR COMPUTING MACHINERY. NEW YORK, US, VOL. 29, NR. 1, PAGE(S) 50-65 XP000823873 ISSN: 0146-4833 abstract page 56, paragraph 4.2 -page 58, paragraph 4.2

## Description

### COPYRIGHT NOTICE

A portion of the disclosure of this patent document contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever. The following notice applies to the software and data as described below and in the drawings hereto: Copyright © 2001, Intel Corporation, All Rights Reserved.

### FIELD OF THE INVENTION

This invention relates to the field of cellular based data networks, and, more particularly, to a method of improving data transmission to clients on these networks.

### BACKGROUND OF THE INVENTION

In cellular based networks, mobile devices (a phone, personal digital assistant, and laptop, for instance, hereinafter referred to as "cellular clients") are connected to a network. Since these networks support TCP/IP (Transmission Control Protocol/Internet Protocol) sockets, cellular clients can establish connections with arbitrary servers on the Internet.

In the current state of cellular networks, cellular clients frequently cannot receive data connections from these networks, i.e., they cannot listen on a socket and await connection from a server or peer (i.e., other cellular clients). Consequently, the "push" model of data distribution does not work for cellular clients on these networks.

Instead, cellular clients may receive data from cellular networks manually by calling in at various times determined by the user, or automatically at predetermined intervals. The latter of these methods is called polling. Polling is one way in which the "push" method of data distribution can be emulated. Polling, however, has some disadvantages. For one, it is an inefficient use of the client's battery life. Also, it can be potentially costly to the user, depending on how the data usage is billed. Furthermore, the polling interval may differ in different applications, with no good way to predetermine an optimal interval.
WO 01/28168 discloses a system for transferring packet data from a network server to a mobile communication device over a digital radio communication network. When a network server wants to transfer packet data to the mobile communication device it sends a message to the mobile communication device over the digital radio communication network requesting the mobile device to set up a packet data protocol connection with the server. In response, the mobile communication station sets up a data protocol connection with the server and retrieves the data stored on the server for the mobile device.
According to one aspect, the present invention provides a method comprising:
monitoring, from a cellular network data stored in a plurality of servers connected to the cellular network;
detecting, from the cellular network, when data for a client, arrives at one of said plurality of servers;
determining the client's paging address;
in response to detecting data for the client, utilizing a paging functionality to notify the client that the client has data that is stored in said one of said plurality of servers; and
in response to the client connecting to said one of said plurality of servers via the cellular network and requesting the data, sending the data to the client from the server via the cellular network.

### BRIEF DESCRIPTION OF THE DRAWINGS

The present invention is illustrated by way of example, and not by way of limitation, in the figures of the accompanying drawings and in which like reference numerals refer to similar elements and in which:
Fig. 1 illustrates a cellular network in an exemplary embodiment.
Fig. 2 illustrates an interceptor in a cellular network in accordance with embodiments of the invention.
Fig. 3 is a flowchart illustrating a method in accordance with embodiments of the invention.
Fig. 4 is a flowchart illustrating a method for a client in accordance with embodiments of the invention.

### DETAILED DESCRIPTION OF THE INVENTION

In one aspect of the invention is a method for emulating push functionality in a cellular data network. When a given server in the cellular network receives data for a given client, an interceptor in communication with the server determines the client's paging address, and utilizes a paging functionality to notify the client that it has data. In response to this notification, the client connects to the server and requests the data. The server sends the data to the client in response to this request.

The present invention includes various operations, which will be described below. The operations of the present invention may be performed by hardware components or may be embodied in machine-executable instructions, which may be used to cause a general-purpose or special-purpose processor or logic circuits programmed with the instructions to perform the operations.

Alternatively, the operations may be performed by a combination of hardware and software.

The present invention may be provided as a computer program product which may include a machine-readable medium having stored thereon instructions which may be used to program a computer (or other electronic devices) to perform a process according to the present invention. The machine-readable medium may include, but is not limited to, floppy diskettes, optical disks, CD-ROMs (Compact Disc-Read Only Memories), and magneto-optical disks, ROMs (Read Only Memories), RAMs (Random Access Memories), EPROMs (Erasable Programmable Read Only Memories), EEPROMs (Electromagnetic Erasable Programmable Read Only Memories), magnetic or optical cards, flash memory, or other type of media / machine-readable medium suitable for storing electronic instructions.

Moreover, the present invention may also be downloaded as a computer program product, wherein the program may be transferred from a remote computer (e.g., a server) to a requesting computer (e.g., a client) by way of data signals embodied in a carrier wave or other propagation medium via a communication link (e.g., a modem or network connection). Accordingly, herein, a carrier wave shall be regarded as comprising a machine-readable medium.

### Introduction

In embodiments of the invention, a cellular based network may comprise GPRS (General Packet Radio System) or CDPD (Cellular Digital Packet Data), for example. Furthermore, a client may comprise a mobile device such as a phone, a PDA (Personal Digital Assistant), or a laptop, which supports TCP/IP (Transmission Control Protocol/Internet Protocol) sockets that enables the client to establish connections with arbitrary servers on the Internet.

For purposes of illustration, the GPRS network is described herein. A GPRS network is a service that provides actual packet radio access for mobile Global System for Mobile Communications (GSM) and time-division multiple access (TDMA) users. Some of the benefits of GPRS are that it reserves radio resources only when there is data to send and it reduces reliance on traditional circuit-switched network elements.

Under the current state of cellular networks, data can only be pulled from the network rather than pushed. Pull refers to the demanding of data in real time by a user. Push refers to the transmission of data at a predetermined time, or under predetermined conditions, such as when data is received. While push functionality can be emulated using polling, polling can be an inefficient use of the client's battery life. Also, it can be potentially costly to the user, depending on how the data usage is billed. Furthermore, the polling interval may differ in different applications, with no good way to predetermine an optimal interval.

In embodiments of the invention, paging functionality is used to emulate push functionality in cellular networks. In the GPRS network, for example, paging functionality is achieved using the cellular based Short Message Service (hereinafter "SMS"). SMS is a bi-directional service used by various cellular networks for short alphanumeric messages that are transported in a store-and-forward fashion. While SMS paging services are described herein, it is envisioned that any network having an appropriate paging network may be used, and that it is not necessary to use a cellular based paging functionality.

### Exemplary Embodiment

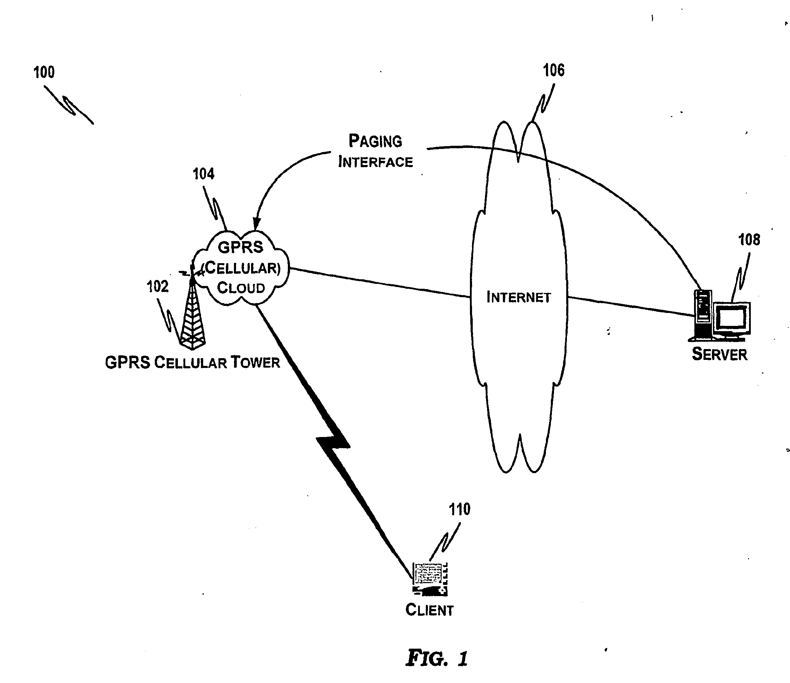

A GPRS network 100 is illustrated in FIG. 1. It comprises a GPRS cellular tower 102 that transmits data across the Internet 106 between one or more servers 108 (only one shown) and one or more clients 110 (only one shown) through GPRS services as represented by a GPRS cloud 104. GPRS services comprise, for example, SMS.

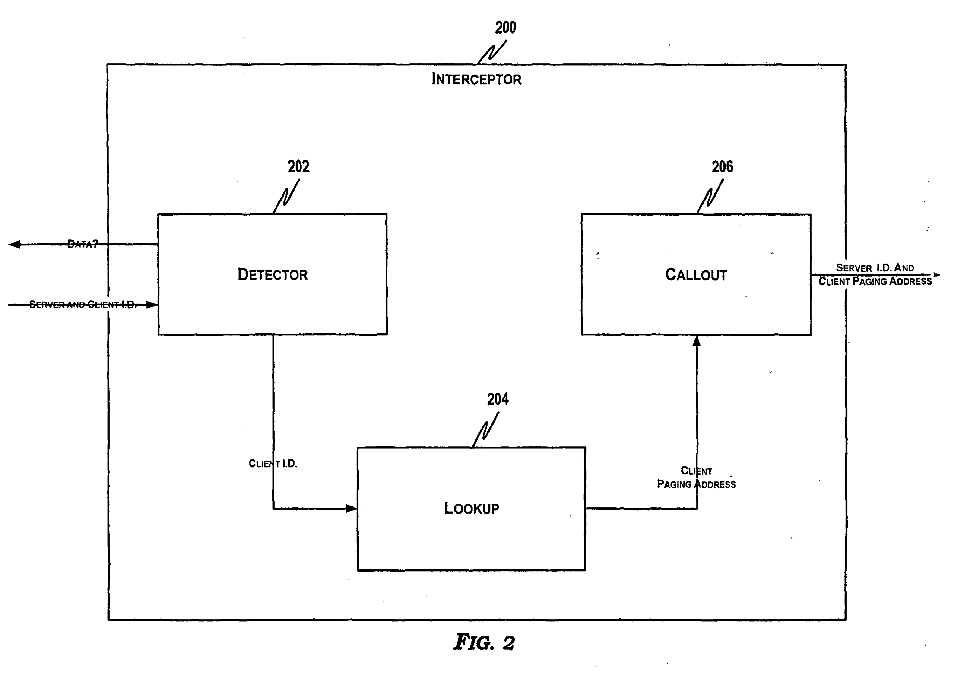

As shown in FIG. 2, when a server 108 receives data, a detector module 202 of an interceptor 200 detects the data. The interceptor 200 forms part of the GPRS services 104 for monitoring the servers 108 in its network 100. The detector then determines which server 108 the data is located on, and which client 110 the data belongs to.

A lookup-module 204 of the interceptor 200 obtains the paging address for the client 110. A callout module 206 of the interceptor 200 then accesses the SMS services of the GPRS services 104 using a paging interface, and passes in the paging address for the client 110. The SMS pages the client 110, notifying the client 110 that it has data from a given server 108.

The client 110 may then establish a connection with the server 108. This connection may be made manually by a user on the client 110, in which case the user would utilize a server I.D. to establish the connection. This connection may, alternatively, be made automatically, in which case the client 110 would automatically establish a connection with the server 108 in response to receiving notification that it has data.

While the detector module, lookup module, and callout module are described and illustrated herein as three separate modules, it should be understood by one of ordinary skill in the art that the modules need not be distinct, individual modules. The modules should be understood as comprising the functionality described herein, and that the functionality may, instead, be embedded in a single module, or any other combination of modules.

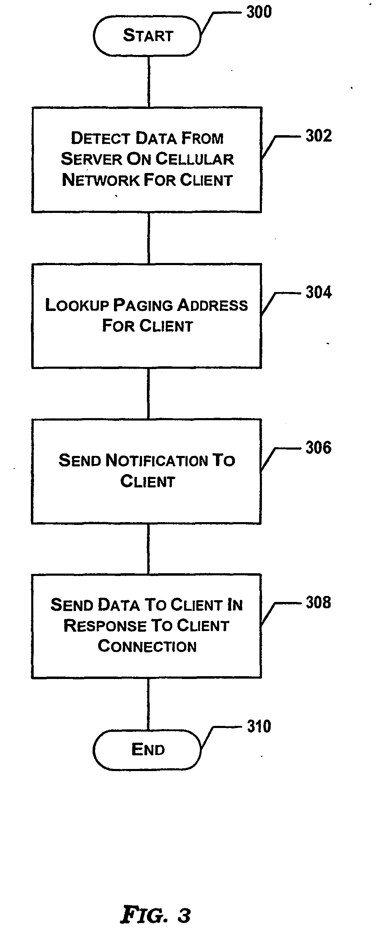

FIG. 3 is a flowchart illustrating a method in accordance with embodiments of the invention. The method begins at block 300 and continues to block 302 where data is detected on a server for a given client on the cellular network. At block 304, a paging address for the client is determined, and at block 306, notification via a page is sent to the client that it has data. At block 308, the data is sent to the client from the server in response to the client connecting to the network. The method ends at block 310.

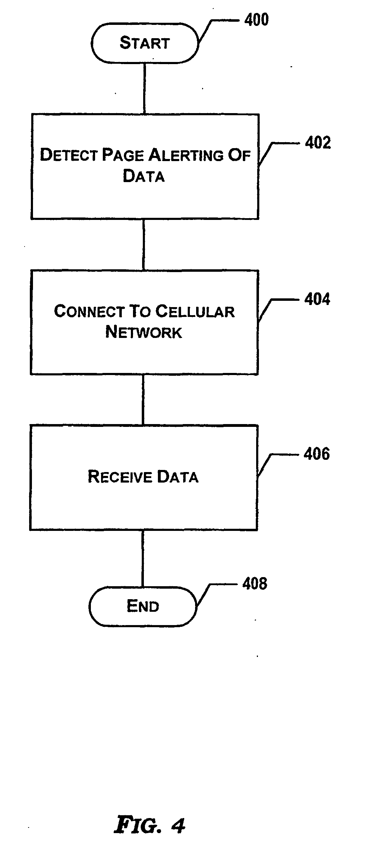

FIG. 4 is a flowchart illustrating a method for a client in accordance with embodiments of the invention. The method begins at block 400 and continues to block 402 where a client detects a page alerting the client that one of the servers on a cellular network has data for the client. At block 404, the client connects to the network, and at block 406, the client receives the data. The method ends at block 408.

### Conclusion

In the foregoing specification, the invention has been described with reference to specific embodiments thereof. It will, however, be evident that various modifications and changes may be made thereto without departing from the scope of the invention as defined by the claims. The specification and drawings are, accordingly, to be regarded In an illustrative rather than a restrictive sense.

For example, while the GPRS network has been described herein, it should be obvious to one of ordinary skill in the art that the concepts of this invention are not strictly limited to such a network In fact, other cellular networks such as CDPD may be used.

## Claims

1. A method comprising:
monitoring, from a cellular network (100) data stored in a plurality of servers (108) connected to the cellular network (100);
detecting (302), from the cellular network (100), when data for a client (110), arrives at one of said plurality of servers 108;
determining (304) the client's paging address;
in response to detecting data for the client (110), utilizing (306) a paging functionality to notify the client (110) that the client has data that is stored in said one of said plurality of servers; and
in response to the client connecting to said one of said plurality of servers (108) via the cellular network (100) and requesting the data, sending (308) the data to the client (108) from the server (108) via the cellular network (100).

2. The method of claim 1, wherein the sending the data to the client comprises sending the data to the client using Transmission Control Protocol/Internet Protocol TCP/IP.

3. The method of claim 1, wherein the cellular network comprises General Packet Radio System GPRS.

4. The method of claim 3, wherein the paging functionality comprises a cellular based paging functionality.

5. The method of claim 4, wherein the paging functionality comprises Short Message System SMS.

6. An apparatus comprising:
means (200) for monitoring, from a cellular network (100), data stored on a plurality of severs (108) connected to the cellular network (100);
means (202) for detecting when data for a given client arrives on one of said plurality of servers;
means (204) for determining the given client's paging address; and
means (206) for utilizing a paging functionality of the cellular network (100) to notify the client (100) that the client has data on said one of said plurality of servers (108), when the detecting means detects said data arriving on said server (108).

7. The apparatus of claim 6, wherein the client comprises a mobile device.

8. The apparatus of claim 6, wherein the cellular network comprises General Packet Radio System GPRS.

9. The apparatus of claim 8, wherein the paging functionality comprises Short Message System SMS.

10. A system comprising:
a plurality of servers (108) connected to a cellular network (100), each server being operable to:
receive data for one or more clients in the cellular network 100; and
send the data to a given one of the clients in response to the given client connecting to the server (108) via the cellular network (100) and requesting the data; and
an interceptor (200) being in communication with the plurality of servers (108) and comprising:
means for monitoring data stored in the plurality of servers (108) ;
means for detecting when data for a given client arrives at one of the plurality of servers (108) ; determine the given client's paging address; and means,
responsive to detecting that one of the plurality of servers 108 has received data for a given client, for utilizing a paging functionality of the cellular network (100) to notify the given client that the given client has data that is stored on said one of said plurality of servers (108).

11. The system of claim 10, wherein the cellular network comprises General Packet Radio System GPRS.

12. The system of claim 11, wherein the paging functionality comprises a cellular based paging functionality.

13. A machine-readable medium having stored thereon data representing sequences of instructions, the sequences of instructions which, when executed by a processor, cause the processor to perform the steps of the method of any of claims 1 to 5.

## Patentansprüche

1. Verfahren mit folgenden Schritten:
Überwachen von Daten, die in mehreren mit einem Fuwkzellennetz (100) verbundenen Servern (108) gespeichert sind, von dem Funkzellennetz (100) aus,
Erfassen, von dem Funkzellennetz (100) aus, wenn Daten für einen Client (110) an einem der Server (108) ankommen,
Bestimmen (304) der Paging-Adresse des Clients,
in Reaktion auf die Erfassung von Daten für den Client (110), Verwenden (306) einer Paging-Funktion, um den Client (110) zü benachrichtigen, daß in dem einen Server Daten für ihn gespeichert sind, und
in Reaktion darauf, daß sich der Client über das Funkzellennetz (100) mit dem einen Server (108) verbindet und die Daten verlangt, Senden (308) der Daten von dem Server (108) über das Funkzellennetz (100) an den Client (110).

2. Verfahren nach Anspruch 1, wobei das Senden der Daten an den Client das Senden der Daten an ihn unter Verwendung des Transmission Control Protocol/Internet Protocol TCP/IP beinhaltet.

3. Verfahren nach Anspruch 1, wobei das Funkzellennetz ein General Packet Radio System GPRS beinhaltet.

4. Verfahren nach Anspruch 3, wobei die Paging-Funktion eine Funkzellen-basierte Paging-Funktion beinhaltet.

5. Verfahren nach Anspruch 4, wobei die Paging-Funktion ein Kurznachrichtensystem SMS beinhaltet.

6. Vorrichtung, aufweisend:
eine Einrichtung (200) zum Überwachen von Daten, die in mehreren mit einem Funkzeilennetz (100) verbundenen Servern (108) gespeichert sind, von dem Funkzellennetz (100) aus,
eine Einrichtung (202) zum Erfassen, wenn Daten für eirien gegebenen Client an einem der Server ankommen,
eine Einrichtung (204) zum Bestimmen der Paging-Adresse des gegebenen Clients, und
eine Einrichtung (206) zur Verwendung einer Paging-Funktion des Funkzellennetzes (100) zur Benachrichtigung des Clients (100), daß sich auf, dem einen Server Daten für ihn befinden, wenn die Erfassungseinrichtung die auf dem Server (108) ankommenden Daten erfaßt.

7. Vorrichtung nach Anspruch 6, wobei der Client ein Mobilgerät aufweist.

8. Vorrichtung nach Anspruch 6, wobei das Funkzellennetz ein General Packet Radio System GPRS beinhaltet.

9. Vorrichtung nach Anspruch 8, wobei die Paging-Funktion ein Kurznachrichtensystem SMS beinhaltet.

10. System, aufweisend:
mehrere Server (108), die mit einem Funkzellennetz (100) verbunden sind und jeweils eingerichtet sind,
Daten für einen oder mehrere Clients in dem Funkzellennetz (100) zu empfangen, und
in Reaktion darauf, daß sich ein gegebener Client über das Funkzellennetz (100) mit dem Server (108) verbindet und die Daten verlangt, die Daten an den gegebenen Client zu senden, und
eine Abfangeinrichtung (200), die mit den Servern (108) in Verbindung steht und folgendes aufweist:
eine Einrichtung zum Überwachen von Daten, die in den Servern (108) gespeichert sind,
eine Einrichtung zum Erfassen, wenn Daten für einen gegebenen Client an einem der Server (108) ankommen und zum Bestimmen der Paging-Adresse des gegebenen Clients sowie
eine Einrichtung, die auf die Erfassung anspricht, daß einer der Server (108) Daten für einen gegebenen Client empfangen hat, um eine Paging-Funktion des Funkzellennetzes (100) dazu zu verwenden, den gegebenen Client zu benachrichtigen, daß Daten für ihn auf dem einen Server (108) gespeichert sind.

11. System nach Anspruch 10, wobei das Funkzellennetz ein General Packet Radio System GPRS beinhaltet.

12. System nach Anspruch 11, wobei die Paging-Funktion eine Funkzellen-basierte Paging-Funktion beinhaltet.

13. Maschinenlesbares Medium mit darauf gespeicherten Daten, die Abfolgen von Anweisungen darstellen, die bei Ausführung durch einen Prozessor diesen dazu veranlassen, die Schritte des Verfahrens nach einem der Ansprüche 1 bis 5 auszuführen.

## Revendications

1. Procédé comprenant :
la surveillance, depuis un
réseau cellulaire (100) de données stockées dans une pluralité de serveurs (108) connectés au réseau cellulaire (100) ;
la détection (302), depuis le réseau cellulaire (100), de l'instant où des données destinées à un client (110) arrivent au niveau de l'un parmi ladite pluralité de serveurs (108) ;
la détermination (304) de l'adresse d'appel du client ;
en réponse à la détection de données pour le client (110), l'utilisation (306) d'une fonctionnalité d'appel pour notifier au client (110) le fait que le client possède des données qui sont stockées dans ledit un parmi ladite pluralité de serveurs ; et
en réponse à la connexion du client audit un parmi ladite pluralité de serveurs (108) par l'intermédiaire du réseau cellulaire (100) et à la demande de la donnée, l'envoi (308) des données au client (108) depuis le serveur (108) par l'intermédiaire du réseau cellulaire (100).

2. Procédé selon la revendication 1 dans lequel l'envoi de données au client comprend l'envoi des données au client en utilisant le protocole TCP/IP (Transmission Control Protocol/Internet Protocol).

3. Procédé selon la revendication 1 dans lequel le réseau cellulaire comprend le système GPRS (General Packet Radio System).

4. Procédé selon la revendication 3 dans lequel la fonctionnalité d'appel comprend une fonctionnalité d'appel basée sur le cellulaire.

5. Procédé selon la revendication 4 dans lequel la fonctionnalité d'appel comprend le système SMS (Short Message System).

6. Dispositif comprenant :
un moyen (200) destiné à surveiller, depuis un réseau cellulaire (100), des .données stockées sur une pluralité de serveurs (108) connectés au réseau cellulaire (100) ;
un moyen (202) destiné à détecter l'instant où des données destinées à un client donné arrivent sur l'un de ladite pluralité de serveurs ;
un moyen (204) destiné à déterminer l'adresse d'appel du client donné ; et
un moyen (206) destiné à utiliser une fonctionnalité d'appel du réseau cellulaire (100) pour notifier au client (100) le fait que le client possède des données sur ledit un parmi ladite pluralité dé serveurs (108) quand le moyen de détection détecte l'arrivée desdites données sur ledit serveur (108).

7. Dispositif selon la revendication 6 dans lequel le client comprend un dispositif mobile.

8. Dispositif selon la revendication 6 dans lequel le réseau cellulaire comprend le système GPRS (General Packet Radio System).

9. Dispositif selon la revendication 8 dans lequel la fonctionnalité d'appel comprend le système SMS (Short Message System).

10. Système comprenant
une pluralité de serveurs (108) connectés à un réseau cellulaire (100), chaque serveur étant utilisable pour:
recevoir dés données pour un ou plusieurs clients dans le réseau cellulaire 100 ; et
envoyer les données à un client donné parmi les clients en réponse à la connexion du client donné au serveur (108) par l'intermédiaire du réseau cellulaire (100) et à la demande des données ; et
un intercepteur (200) qui est en communication avec la pluralité de serveurs (108) et comprenant :
un moyen destiné à surveiller les données stockées dans la pluralité de serveurs (108) ;
un moyen destiné à détecter l'instant où des données destinées à client donné arrivent sur l'un parmi la pluralité de serveurs (108) ; "déterminer l'adresse d'appel du client donné ; et un moyen,
réagissant à la détection du fait que l'un parmi la pluralité de serveurs 108 a reçu des données pour un client donné, pour utiliser une fonctionnalité d'appel du réseau cellulaire (100) pour notifier au client donné le fait que le client donné possède des données qui sont stockées sur ledit un parmi ladite pluralité de serveurs (108).

11. Système selon la revendication 10 dans lequel le réseau cellulaire comprend le système GPRS (General Packet Radio System).

12. Système selon la revendication 11 dans lequel la fonctionnalité d'appel comprend une fonctionnalité d'appel basée sur le cellulaire.

13. Support lisible par une machine sur lequel sont stockées des données représentant des séquences d'instructions, séquences d'instructions qui, quand elles sont exécutées par un processeur, provoquent l'exécution par le processeur des étapes du procédé selon l'une quelconque des revendications 1 à 5.
